# EUROPEAN PATENT SPECIFICATION

(11) **EP 0 779 176 B1**
(45) Date of publication and mention of the grant of the patent: **04.06.2003**
(21) Application number: 96203542.4
(22) Date of filing: 13.12.1996
(51) Int. Cl.: B60N 2/36, B60N 2/42

(54) **Vehicle rear seat**
Fahrzeugrücksitz
Siège arrière de véhicule

(30) Priority: 15.12.1995 NL 1001910
(43) Date of publication of application: 18.06.1997
(73) Proprietor: Snoeks Automotive B.V., 2153 GB Nieuw Vennep (NL)
(72) Inventor: Scholte, Bartholomeus, 4824 EZ Breda (NL)
(74) Representative: Hooiveld, Arjen Jan Winfried

(56) References cited:
- DE-A- 2 923 550
- DE-A- 2 941 235
- DE-A- 3 125 068
- DE-A- 3 813 557
- DE-A- 3 931 696
- US-A- 4 667 492
- US-A- 4 866 820

## Description

The invention relates to a vehicle of the type provided with a cargo space which comprises at least one seat or assembly of seats provided with a backrest as well as a safety belt attached to said backrest, near the upper edge thereof.

A vehicle of this type according to the preamble of claim 1 is generally known. The known vehicle is a van with a passenger compartment and a cargo compartment. Because of this dual character the van is very popular, especially among building contractors. The passenger compartment contains two passenger seat assemblies, whereby the front seat assembly is provided, in a manner known per se, with a "regular" three-point safety belt construction. The back seat assembly, however, has a two-point safety belt for the middle seat, whilst the two outer seats each have a three-point safety belt construction, which is integrated in the back seat assembly. The two ends of each three-point safety belt are incorporated in the back seat assembly, therefore, as is the receiving member for the metal insert member connected to each safety belt.

One drawback of the known vehicle is the fact that the three-point safety belt construction used with the back seat assembly thereof must be capable of absorbing - as a result of being integrated in the back seat assembly - the very large forces that occur in case of a collision. In connection with this the presence of a separate provision behind the front seat assembly for "stopping" the back passengers in case of a collision is a statutory requirement in various countries. It stands to reason that such a separate provision makes the known vehicle less attractive for financial reasons.

Documents DE 29 41 235 A and DE 39 31 696 A disclose fastening arrangements of seat backrest to the body of the vehicle by means of rigid pulling arm or flexible belt.

The object of the invention is to provide an inexpensive, efficient yet very safe vehicle, wherein the above drawbacks of the prior art are obviated.

That objective is accomplished by a vehicle according to claim 1. As a result of this there is no need to make a separate provision for stopping the passengers in case of a frontal collision. An advantage of this construction is moreover the fact that the position of said seat or assembly of seats in the longitudinal direction of the vehicle is not very critical, it may even vary considerably, especially in order to enlarge the cargo space. To this end the position of said seat or assembly of seats in the longitudinal direction of the vehicle may be varied, whereby said back seat is preferably movable along rails mounted on the vehicle floor, and/or whereby said back seat can be secured in various positions by means of pin joints. It is preferred to design said rigid pulling arms positioned on either side of said seat or assembly of seats, which arms are each with one end attached to the backrest, at shoulder height, and which are with the other end attached to a C-post, likewise at shoulder height, or to the floor, at floor height.
In one embodiment of a vehicle according to the invention the seat or assembly of seats is a back seat or assembly of seats.

In another embodiment of a vehicle according to the invention said seat or assembly of seats is secured to the vehicle floor via a frame. More in particular said frame is at least substantially N-shaped (or the mirror image thereof) when seen in cross-sectional view. An important advantage of this specific construction of the frame is that said seat or assembly of seats is anchored especially firmly to the vehicle floor. Extensive testing has shown that in case of a collision, especially at high speeds, collapsing of the frame (causing said seat or assembly of seats to tilt forwards) is prevented at all times.

In another embodiment of a vehicle according to the invention said seat or assembly of seats includes a horizontal beam, to which the back part, the seat part and the frame are connected. This leads to a very simple, elegant construction, wherein the back part, the seat part and the frame can be connected to the beam in an efficient manner, in particular by being welded thereto. The beam is very solid, so that it is capable of absorbing all forces in case of a collision.

Hereafter one embodiment of the invention will be explained in more detail with reference to Figures shown in a drawing, wherein:
- Figure 1 is a schematic perspective view of a vehicle comprising a back seat assembly provided with a prior art safety belt construction;
- Figure 2 corresponds with Figure 1, with this difference that the position of the C-pillar is clearly indicated;
- Figure 3 corresponds with Figure 1, with this difference that the safety construction according to the invention is used; and
- Figure 4 shows a schematic cross-sectional view (a) and a schematic front view (b) of the back seat assembly shown in Figure 3.

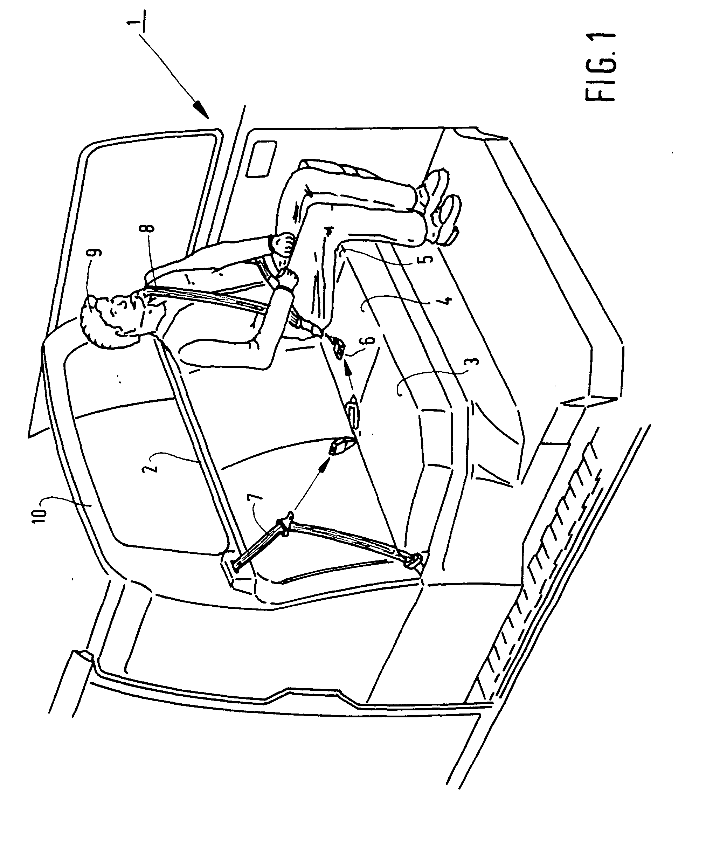

Figure 1 shows a schematic perspective (partially cutaway) view of a vehicle comprising a prior art construction. Vehicle 1 includes a back seat assembly 2 comprising three passenger seats 3, 4 and 5. The middle seat 4 is fitted with a two-point safety belt 6, whilst outer seats 3 and 5 are each provided with a standard safety belt construction 7, 8, which is integrated in the back seat assembly 2. Figure 1 shows a person 9 present on seat 5, with the three-point safety belt 8 being fastened. The arrows indicate the direction in which the metal insert members are to be inserted into the respective receiving members. As a matter of fact back seat assembly 2 forms part of a structure which can be built in as standard in for example a van comprising a passenger compartment and a cargo compartment. A drawback of the prior art three-point safety belt construction integrated in back seat assembly 2 is the fact that the back seat assembly 2 must withstand the forces that occur in case of a collision, which may cause the back seat construction to collapse, which is highly dangerous, with the back passengers being thrown forwards. This is why the provision of separate protection against injury of the back passengers is a statutory requirement in many countries. Such protection is made in the form of a "cushion" to be provided between back seat assembly 2 and the front seat assembly (not shown), which offers additional protection for passenger 9 if back seat assembly 2 should collapse in case of a collision.

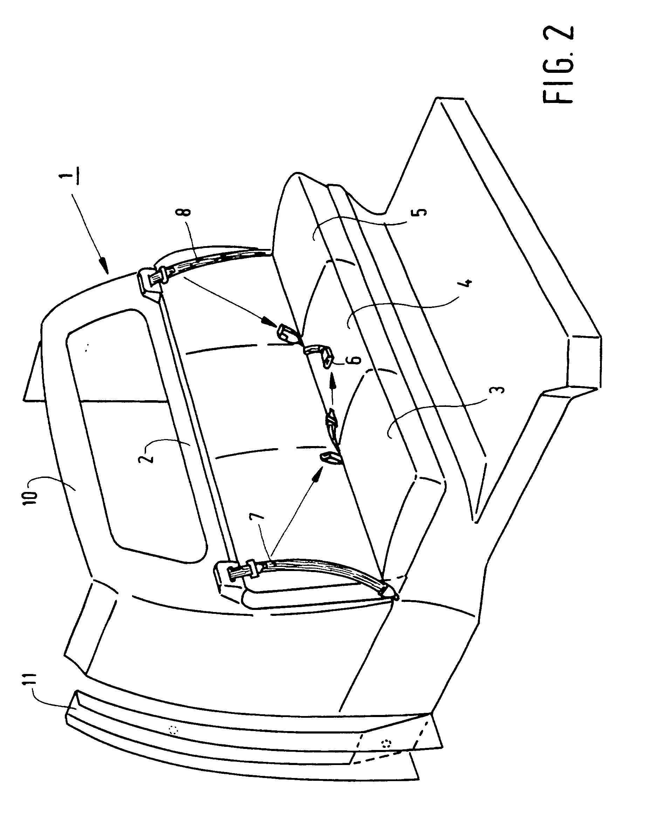

Figure 2 corresponds with Figure 1, and like parts are numbered alike. Figure 2 shows the position of a vertical member 11, the so-called C-pillar of vehicle 1, which is present in every vehicle.

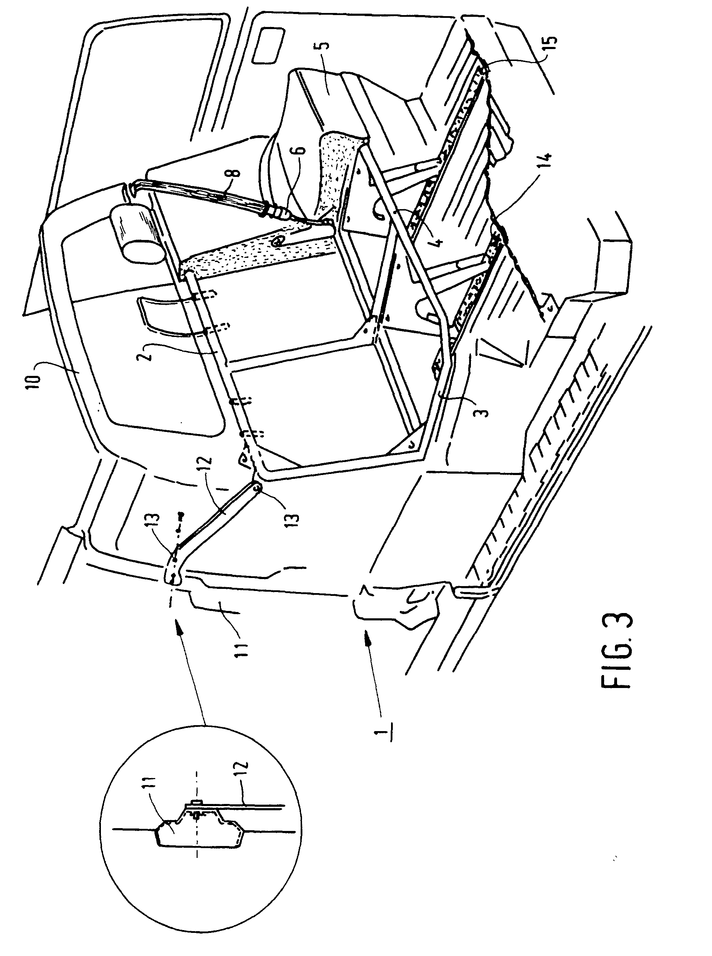

Figure 3 shows a safety construction according to the invention. Lest the Figure should become unnecessarily complicated, the three-point safety belt construction integrated in back seat assembly 2 is only illustrated with regard to seat 5. Back seat assembly 2 is provided with a rigid pulling arm 12 at shoulder height, which arm is secured to the upper part of C-pillar 11 of vehicle 1. A similar pulling arm is provided on the other side of back seat assembly 2, but it is not shown in the Figure. Both pulling arms 12 are secured to back seat assembly 2 and to C-pillar 11 by means of a bolt/nut connection 13. Said connection is illustrated in more detail in the encircled part, wherein C-pillar 11 is shown in cross-sectional view. Instead of being connected to C-pillar 11, pulling arms 12 may also be connected to the floor part located behind the back seat, of course. An important advantage of the construction according to the invention is that the position of back seat assembly 2 may vary in the longitudinal direction of the vehicle 1, so that also the cargo space behind the back seat can be enlarged, if desired. To this end back seat assembly 2 is preferably movable along the floor of vehicle 1 via two guide rails 14,15. Because the construction is firmly anchored to C-pillar 11, a separate provision between back seat assembly 2 and the front seat assembly (not shown) for protecting back passengers is no longer required. Also in this Figure those parts that correspond with parts shown in Figures 1 and 2 are indicated by the same numerals.

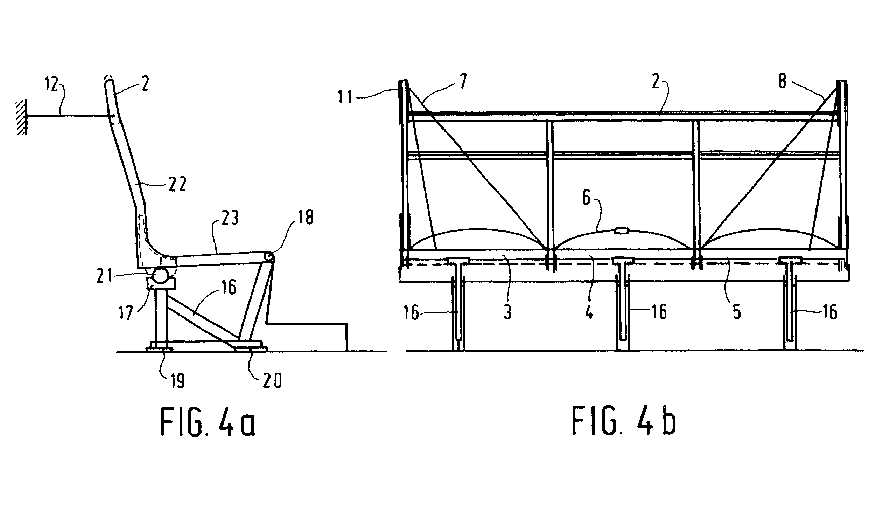

Figure 4 shows a cross-sectional view (a) and a front view (b) of the back seat assembly 2 of Figure 3. Back seat assembly 2 is secured to the floor of vehicle 1 via a frame 16. Said frame 16 is N-shaped when seen in cross-sectional view, so that a very firm anchoring of back seat assembly 2 to the underlying floor is obtained. This excludes the risk of the back seat assembly 2 collapsing forwards in case of a collision. The N-shaped construction is attached to back seat assembly 2 in points 17, 18, and is secured to the floor in points 19, 20. Back seat assembly 2 includes a horizontal tube 21, to which the back part 22 and the seat part 23 are connected, and - as already said before - to which frame 16 is also secured. All this leads to a simple yet elegant construction without lessening the strength of the construction required in connection with the proposed three-point safety belt construction according to the invention.

It is noted that the invention may be used in several vehicle types by varying the length of the pulling arm(s) 12 and/or the width of frame 16.

## Claims

1. A vehicle (1) of the type provided with a cargo space, which comprises at least one seat or assembly (2) of seats (3,4,5) provided with a backrest not capable of being folded down, as well as a safety belt (6,7,8) integrated in and attached to said backrest, near the upper edge thereof, **characterized in that** at least one rigid pulling arm (12) is provided, which is attached on the one hand to the upper edge of the backrest and on the other hand to a post (11) formed by the C-pillar of said vehicle (1) and/or to a floor portion of the vehicle (1), at a point located behind said backrest, which pulling arm (12) is capable of absorbing pulling forces exerted on the safety belt (6,7,8) in case of a calamity.

2. A vehicle (1) according to claim 1, wherein said seat or assembly (2) of seats (3,4,5) is a back seat or assembly of back seats.

3. A vehicle (1) according to claim 1 or 2, wherein said seat or assembly (2) of seats (3,4,5) is secured to the vehicle floor by means of a frame (16) .

4. A vehicle (1) according to claim 3, wherein said frame (16) is at least substantially N-shaped (or the mirror image thereof) when seen in cross-sectional view.

5. A vehicle (1) according to claim 3 or 4, wherein said seat or assembly (2) of seats (3,4,5) includes a horizontal beam (21), to which the back part (22), the seat part (23) and the frame (16) are connected.

## Patentansprüche

1. Fahrzeug (1) in der Bauart mit einem Frachtraum, das mindestens einen Sitz oder eine Anordnung (2) von Sitzen (3, 4, 5) aufweist, ausgestattet mit einer Rückenlehne, die nicht heruntergeklappt werden kann, sowie mit einem Sicherheitsgurt (6, 7, 8), der in die Rückenlehne nahe deren oberen Randes integriert und an dieser angebracht ist, **dadurch gekennzeichnet, dass** mindestens ein starrer Zugarm (12) bereitgestellt ist, der einerseits am oberen Rand der Rückenlehne und andererseits an einer von der C-Säule des Fahrzeugs (1) gebildeten Stütze (11) und/oder am Bodenabschnitt des Fahrzeuges (1) an einer hinter der Rückenlehne gelegenen Stelle befestigt ist, wobei von dem Zugarm (12) Zugkräfte absorbierbar sind, die im Fall eines Unglücks auf den Sicherheitsgurt (6, 7, 8) ausgeübt werden.

2. Fahrzeug (1) gemäß Anspruch 1, wobei der Sitz oder die Anordnung (2) von Sitzen (3, 4, 5) ein Rücksitz oder eine Anordnung von Rücksitzen ist.

3. Fahrzeug (1) gemäß Anspruch 1 oder 2, wobei der Sitz oder die Anordnung (2) von Sitzen (3, 4, 5) mittels eines Rahmens (16) am Fahrzeugbogen befestigt ist.

4. Fahrzeug (1) gemäß Anspruch 3, wobei der Rahmen (16) zumindest im Wesentlichen N-förmig (oder das Spiegelbild hiervon) ist, wenn in Querschnittsansicht betrachtet.

5. Fahrzeug (1) gemäß Anspruch 3 oder 4, wobei der Sitz oder die Anordnung (2) von Sitzen (3, 4, 5) einen horizontalen Träger (21) aufweist, mit welchem das Rückenteil (22), das Sitzteil (23) und der Rahmen (16) verbunden sind.

## Revendications

1. Véhicule (1) du type équipé d'un espace utilitaire, qui comprend au moins un siège ou un ensemble (2) de sièges (3, 4, 5) équipés d'un dossier ne pouvant pas être rabattu, ainsi que d'une ceinture de sécurité (6, 7, 8) intégrée à l'intérieur et attachée audit dossier, à proximité du bord supérieur de celui-ci, **caractérisé en ce qu'**au moins un bras de traction rigide (12) est prévu, lequel est attaché d'une part au bord supérieur du dossier et d'autre part à un montant (11) formé par la colonne en forme de C dudit véhicule (1) et/ou sur une partie de plancher du véhicule (1), à un point placé derrière ledit dossier, dont le bras de traction (12) peut absorber des forces de traction exercées sur la ceinture de sécurité (6, 7, 8) en cas d'accident.

2. Véhicule (1) selon la revendication 1, dans lequel ledit siège ou ensemble (2) de sièges (3, 4, 5) est un siège arrière ou un ensemble de sièges arrières.

3. Véhicule (1) selon la revendication 1 ou 2, dans lequel ledit siège ou ensemble (2) de sièges (3, 4, 5) est fixé au plancher du véhicule au moyen d'un cadre (16).

4. Véhicule (1) selon la revendication 3, dans lequel ledit cadre (16) est au moins substantiellement en forme de N (ou l'image inverse de celui-ci), quand il est vu en coupe transversale.

5. Véhicule (1) selon la revendication 3 ou 4, dans lequel ledit siège ou ensemble (2) de sièges (3, 4, 5) comprend un rayon horizontal (21), auquel sont connectés la partie arrière (22), la partie de siège (23) et le cadre (16).
